# EUROPÄISCHE PATENTSCHRIFT

(11) **EP 3 444 404 B1**
(45) Veröffentlichungstag und Bekanntmachung des Hinweises auf die Patenterteilung: **22.11.2023**
(21) Anmeldenummer: 18187945.3
(22) Anmeldetag: 08.08.2018
(51) Int. Cl.: E03B 7/07, E03B 7/04

(54) **VERFAHREN ZUM ERMITTELN DES TRINKWASSERVERBRAUCHS IN EINEM TRINKWASSERSYSTEM**
METHOD FOR DETERMINING THE DRINKING WATER CONSUMPTION IN A DRINKING WATER SYSTEM
PROCÉDURE DE DÉTERMINATION DE LA CONSOMMATION D'EAU POTABLE DANS UN SYSTÈME D'EAU POTABLE

(30) Priorität: 18.08.2017 CH 10352017
(43) Veröffentlichungstag der Anmeldung: 20.02.2019
(73) Patentinhaber: Georg Fischer JRG AG, 4450 Sissach (CH)
(72) Erfinder: Habers, Rene, 53842 Troisdorf (DE); Schuster, Bernd, 8234 Stetten (CH)
(74) Vertreter: Fenner, Seraina

(56) Entgegenhaltungen:
- WO-A1-2016/107937
- DE-A1-102005 024 252
- DE-U1-202012 012 276

## Beschreibung

Die Erfindung betrifft ein Verfahren zum Ermitteln des Trinkwasserverbrauchs in einem Trinkwassersystem vorzugsweise in einem Gebäude, mit einem Steigstrang und mehreren davon abgehenden und in Strömungsrichtung wieder einmündenden Ringleitungen, wobei jede Ringleitung wenigstens einen Verbraucher aufweist und eine Messeinrichtung.

Solche Verrohrungsarten bzw. Trinkwassersysteme sind bekannt und bringen den Vorteil mit sich, dass kein separater Durchspülungsvorgang bei selten genutzten Leitungssträngen mehr nötig ist. Bei selten genutzten Zapfstellen bzw. Verbrauchern bei einer Verrohrung nach Baumstruktur bedingte es einer regelmässigen Durchspülung oder sie neigen zu einer Verkeimung.

Das deutsche Gebrauchsmuster DE 89 15 477 U1 offenbart ein entsprechendes System mit Ringleitungen, wobei es auf Reinstwasser gerichtet ist aber auch auf Trinkwasser applizierbar ist und heutzutage auch in Gebäuden so umgesetzt wird. Ein solch verlegtes Trinkwassersystem, vorzugsweise in Gebäuden beinhaltet einen Steigstrang mit abgehenden Ringleitungen an denen mindestens ein Verbraucher angeordnet ist, das kann eine Toilette, Dusche, Badewanne, Aussenhahn oder sonst eine Zapfstelle für Trinkwasser sein. Durch diese Anordnung ist ein regelmässiges Durchströmen der Ringleitungen gewährleistet, da bei einer Trinkwasserentnahme in einer oberen Ringleitung auch die Durchströmung der anderen Ringleitungen angeregt wird, die ebenfalls mit demselben Steigstrang verbunden sind.

Die DE 10 2005 024252 A1, DE 20 2012 012276 U und WO 2016/107937 A1 zeigen ebenfalls mögliche Varianten der Trinkwasserverrohrung.

Nachteilig an den Leitungssystemen mit Ringleitung ist jedoch, dass die individuellen Trinkwasserverbrauche in den jeweiligen Ringleitungen nicht ermittelt werden können. Das heisst also, bei einem Gebäude z. B. mit mehreren Parteien ist es nur möglich den Trinkwasserverbrauch pro Partei zu ermitteln, wenn auf Ringleitungen verzichtet wird und eine Baumstruktur als Verrohrung vorgesehen wird, was wiederum zu Verkeimungen in selten genutzten Verbrauchern führt. Alternativ dazu besteht die Möglichkeit der Vorsehung von Ringleitungen und somit der Nichtverkeimung des Wassers bei allen Verbrauchern jedoch nicht die Möglichkeit des Ermitteln des Trinkwasserverbrauchs pro Ringleitung.

Es ist Aufgabe der Erfindung ein Verfahren vorzuschlagen, welches trotz Ringleitungen in einem Trinkwassersystem das Ermitteln des Verbrauchs in jeder separaten Ringleitung ermöglicht.

Diese Aufgabe wird erfindungsgemäss dadurch gelöst, dass der Verbrauch des Trinkwassers in jeder Ringleitung mit einer separaten Messeinrichtung ermittelt wird, wobei die Messeinrichtung einen Anschluss für die Zu- und Rückleitung der Ringleitung aufweist.

Das erfindungsgemässe Verfahren bezieht sich auf das Ermitteln des Trinkwasserverbrauchs in einem Trinkwassersystem, vorzugsweise eines Gebäudes.

Das Gebäude weist vorzugsweise mehrere Parteien auf, die jeweils einer separaten Ringleitung zugeordnet sind. Die Ringleitungen sind über einen Steigstrang miteinander verbunden. Am Steigstrang gehen mehrere Ringleitungen ab und münden wieder in Strömungsrichtung oberhalb des Abgangs in den Steigstrang ein. An den Ringleitungen ist jeweils mindestens ein Verbraucher, wie eine Toilette, Badewanne, Aussenhahn, oder sonst eine Zapfstelle angeordnet.

Mittels mindestens einer Messeinrichtung wird der Durchfluss pro Ringleitung ermittelt, wobei jede Ringleitung eine separate Messeinrichtung aufweist mit der der Verbrauch in der jeweiligen Ringleitung ermittelt wird.

Vorzugsweise wird mittels der Messeinrichtung in jeder Ringleitung das verbrauchte Trinkwasser wie auch das durch die Ringleitung zirkulierenden Trinkwasser separat ermittelt. Dadurch wird ermöglicht, dass nur der Verbrauch pro Ringleitung erfasst wird und nicht auch das zirkulierende Trinkwasser als Verbrauch angesehen wird. Das heisst beispielsweise, dass wenn bei einer oberen Ringleitung Trinkwasser entnommen wird auch durch die unteren Ringleitungen Trinkwasser strömt aber dort nicht entnommen wird sondern der Verbrauch nur in einer oberen Ringleitung als Verbrauch von der Messeinrichtung erfasst wird und die unteren Ringleitungen dies als durchströmendes Trinkwasser erkennen und entsprechend verrechnen bzw. anzeigen.

Wenn die Messeinrichtungen der Ringleitungen zum Ermitteln des Trinkwassersverbrauchs miteinander kommunizieren bzw. die erfassten Durchflussmengen austauschen und entsprechend verrechnen, kann genau ermittelt und abgestimmt werden wo welche Menge an Trinkwasser durchgeflossen ist und in welcher Ringleitung das Trinkwasser verbraucht wurde.

Wenn die Messeinrichtungen über eine Zentraleinheit miteinander verbunden sind, ermöglicht dies eine verbesserte Erfassung und Abstimmung der erfassten Durchflussmengen der einzelnen Messeinrichtungen.

Wenn die Messeinrichtungen vom Trinkwasser der Zu- und Rückleitung der Ringleitung durchströmt werden, kann die Strömungsrichtung variieren. Das heisst, die Messeinrichtung weist mindestens einen Anschluss für die Zuleitung der Ringleitung bzw. den Leitungsabschnitt der Ringleitung der weg vom Steigstrang zu den Verbrauchern hin führt und einen Anschluss der Rückleitung der Ringleitung bzw. des Leitungsabschnitts der Ringleitung der weg von den Verbrauchern führt und wieder hin zum Steigstrang und dort einmündet. Dies bedingt, dass die Strömungsrichtung variieren kann, das heisst, dass z. B. die Strömung in der Rückleitung in Richtung Steigstrang führen kann, wenn die Trinkwasserentnahme in einer oberhalb angeordneten Ringleitung stattfindet aber auch dass sie weg vom Steigstrang führen kann wenn die Trinkwasserentnahme in der jeweiligen Ringleitung stattfindet, wodurch der Verbraucher von beiden Seiten der Ringleitung angeströmt wird. Dies bedingt, dass die Messeinrichtung die entsprechende Strömungsrichtung erkennt und entsprechend verrechnet.

Die Messeinrichtung zum Ermitteln des Trinkwasserverbrauchs in einem Trinkwassersystem, vorzugsweise in einem Gebäude, mit einem Steigstrang und mehreren davon abgehenden und in Strömungsrichtung wieder einmündenden Ringleitungen, wobei jede Ringleitung wenigstens einen Verbraucher aufweist, weist einen Anschluss für die Zu- und Rückleitung der Ringleitung auf. Dies dient wie bereits zuvor erwähnt dem kompletten Erfassen und Zuordnen des Trinkwassers welches durch die Ringleitung zirkuliert und welches verbraucht wird.

Um die Durchflussmenge entsprechend zu erfassen, weist die Messeinrichtung mindestens zwei Durchflussmesser auf.

Dadurch kann jeweils in der Zu- wie in der Rückleitung der Durchfluss separat ermittelt werden. Zudem kann vorzugsweise aufgrund der Fliessrichtung ermittelt werden ob das durchgeflossene Trinkwasser als Verbrauch oder als zirkulierendes Trinkwasser zu kalkulieren ist.

Mindestens einer der Durchflussmesser addiert oder subtrahiert in Abhängigkeit der Strömungsrichtung des durchströmenden Trinkwassers die Durchflussmenge zum Verbrauch.

Das heisst, dass wie bereits erwähnt die entsprechende Durchflussrichtung vorzugsweise in der Rückleitung ausschlaggebend ist ob die Menge in der entsprechenden Ringleitung addiert oder subtrahiert wird. Dieser erfasste Wert kann aber auch zum Abgleichen oder Bestimmen der Durchflussmengen in den anderen Ringleitungen dienen da die Messeinrichtungen miteinander kommunizieren.

Als vorteilhaft hat sich gezeigt wenn die Durchflussmesser mechanisch und/oder elektronisch ausgebildet sind. Als mechanische Variante ist ein Laufrad vorstellbar, wie aber auch eine elektronische Variante mittels Sensoren vorstellbar ist, speziell mittels Ultraschalls.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine schematische Abbildung eines Trinkwassersystems mit zwei Ringleitungen und einem Steigstrang,
- Fig. 2: eine schematische Abbildung einer Messeinrichtung in einer Ringleitung, wobei der Verbrauch in der abgebildeten Ringleitung stattfindet (Verbrauch in der entsprechenden Ringleitung) und
- Fig. 3: eine schematische Abbildung einer Messeinrichtung in einer unteren Ringleitung, wobei der Verbrauch in einer oberhalb angeordneten Ringleitung stattfindet (kein Verbrauch in der entsprechenden Ringleitung).

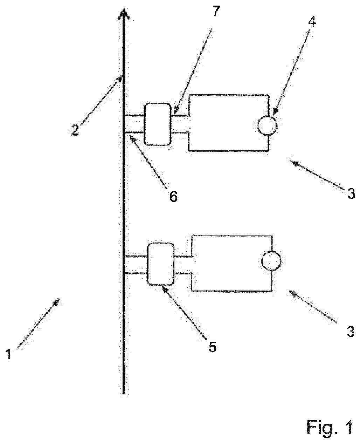

Die in Fig. 1 dargestellte Zeichnung zeigt eine schematische Darstellung eines Trinkwassersystems 1 gemäss dem erfindungsgemässen Verfahren. Das Trinkwassersystem 1 weist einen Steigstrang 2 auf an dem Ringleitungen 3 abgehen und wieder einmünden. In der abgebildeten Fig. 1 sind zwei Ringleitungen 3 angeordnet, wobei selbstverständlich auch eine andere Anzahl von Ringleitungen 3 an einem Steigstrang 2 angeordnet sein können.

Solche Trinkwassersysteme sind meist in Gebäuden aufzufinden die eine regelmässige Durchspülung der Ringleitungen 3 gewährleisten, das heisst, wird am Verbraucher 4 der oberen Ringleitung 3 Trinkwasser entnommen, bewirkt das auch eine Strömung in der unteren Ringleitung 3, da über den Steigstrang 2 das Trinkwasser auch aus der bzw. den unteren Ringleitungen 3 mitgezogen wird. Um möglichst keine Bakterien im Trinkwassersystem zu erhalten ist eine solche immer wieder erfolgende Durchspülung optimal.

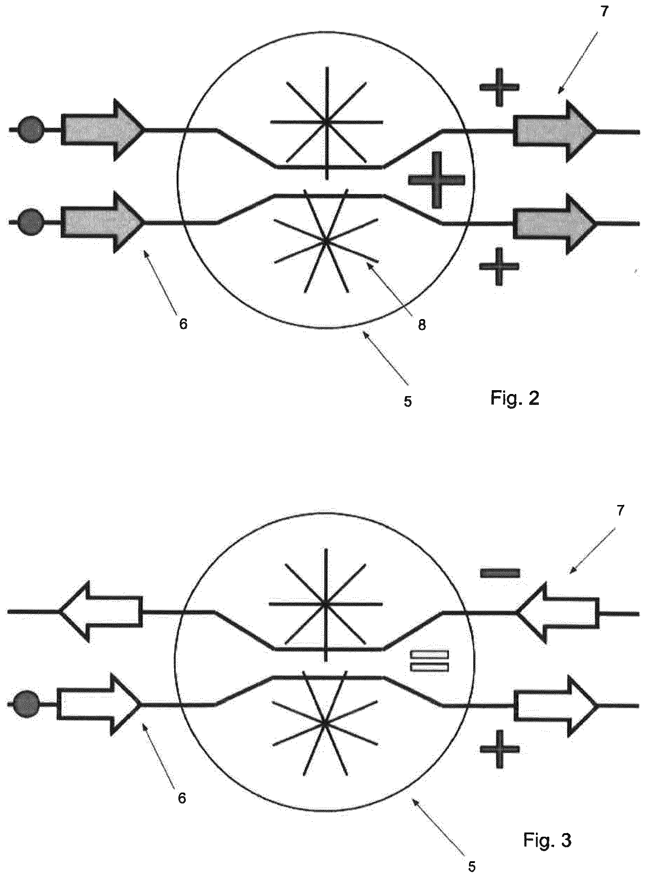

Mit den Messeinrichtungen 5, die jeweils pro Ringleitung 3 angeordnet sind, ist es möglich den Trinkwasserverbrauch pro Einheit bzw. Ringleitung 3 zu ermitteln. Das heisst, über die Zuleitung 6 strömt das Trinkwasser in die Ringleitung 3 zum Verbraucher 4, zudem kann aber das Trinkwasser auch über die Rückleitung 7 der Ringleitung 3 zum Verbraucher strömen, dies ist in Fig. 2 deutlich ersichtlich.

Die Messeinrichtungen 5 mit vorzugsweise mehreren, mindestens mit zwei Durchflussmessern, die in Fig. 2 und 3 schematisch aber nicht einschränkend als Laufräder dargestellt sind aber auch als Sensoren ausgebildet sein bzw. elektronisch wirken können, zeigen die Art der Ermittlung der Durchflussmenge auf.

Das heisst, strömt es von beiden Seiten der Ringleitung 3 ein, wird jeweils die Durchflussmenge addiert, das heisst auch, der Verbraucher befindet sich in dieser Ringleitung 3.

Es besteht aber auch die Möglichkeit wie in Fig. 3 dargestellt, dass an einem Verbraucher 4 in der oberhalb angeordneten Ringleitung 3 (nicht dargestellt) Trinkwasser entnommen wird und dadurch das Trinkwasser aus den darunterliegenden Ringleitungen 3 in den Steigstrang 2 zurück strömt und in die obige Ringleitung strömt in der der Verbrauch stattfindet. In Fig. 3 ist entsprechend die Messeinrichtung 5 einer unterhalb angeordneten Ringleitung 3 dargestellt, in welcher das Trinkwasser hindurchzirkuliert und somit erst in der oberen Ringleitung verbraucht wird.

Um dies entsprechend zu kalkulieren kann mindestens einer der Durchflussmesser ermitteln, dass eine andere Strömungsrichtung besteht und somit kein Verbrauch in dieser Ringleitung 3 stattfindet und das entsprechend mit dem über die Zuleitung eingeströmten Trinkwasser verrechnet.

### Bezugszeichenliste

- 1: Trinkwassersystem
- 2: Steigstrang
- 3: Ringleitung
- 4: Verbraucher
- 5: Messeinrichtung
- 6: Zuleitung
- 7: Rückleitung
- 8: Durchflussmesser

## Patentansprüche

1. Verfahren zum Ermitteln des Trinkwasserverbrauchs in einem Trinkwassersystem (1), vorzugsweise in einem Gebäude, mit einem Steigstrang (2) und mehreren davon abgehenden und in Strömungsrichtung wieder einmündenden Ringleitungen (3), wobei jede Ringleitung (3) wenigstens einen Verbraucher (4) aufweist und mindestens eine Messeinrichtung (5), wobei der Verbrauch des Trinkwassers in jeder Ringleitung (3) mit einer separaten Messeinrichtung (5) ermittelt wird, wobei die Messeinrichtung (5) mindestens zwei Durchflussmesser (8) aufweist, wobei die Messeinrichtungen (5) vom Trinkwasser der Zu- und Rückleitung (6, 7) der Ringleitung (3) durchströmt werden, wobei die Strömungsrichtung variieren kann, wobei die Messeinrichtung (5) die entsprechende Strömungsrichtung erkennt und entsprechend verrechnet, wobei die Messeinrichtungen (5) der Ringleitungen (3) zum Ermitteln des Trinkwasserverbrauchs miteinander kommunizieren bzw. die erfassten Durchflussmengen miteinander ausgetauscht und entsprechend verrechnet werden oder die Messeinrichtungen (5) über eine Zentraleinheit miteinander verbunden sind.

2. Verfahren zum Ermitteln des Trinkwasserverbrauchs gemäss Anspruch 1, **dadurch gekennzeichnet, dass** mittels der Messeinrichtung (5) in jeder Ringleitung (3) das verbrauchte Trinkwasser wie auch das durch die Ringleitung (3) zirkulierenden Trinkwasser separat ermittelt wird.

## Claims

1. Method for determining the drinking water consumption in a drinking water system (1), preferably in a building, having a riser pipe 2) and several ring lines (3) coming out therefrom and opening in again in the flow direction, wherein each ring line (3) has at least one consumer (4) and at least one measuring device (5) wherein the consumption of the drinking water is determined in each ring line (3) with a separate measuring device (5), wherein the measuring device (5) has at least two throughflow meters (8), wherein the drinking water of the supply and return lines (6, 7) of the ring line (3) flow through the measuring devices (5) wherein the flow direction can vary, wherein the measuring device (5) detects and correspondingly calculates the corresponding flow direction wherein the measuring devices (5) of the ring lines (3) communicate with one another for determining the drinking water consumption or the detected throughflow volumes are exchanged with one another and correspondingly calculated or the measuring devices (5) are connected to one another via a central unit.

2. Method for determining the drinking water consumption according to Claim 1 **characterized in that** the consumed drinking water like also the drinking water circulating through the ring line (3) are determined separately by means of the measuring device (5) in each ring line (3).

## Revendications

1. Procédé de détermination de la consommation d'eau potable dans un système d'eau potable (1), de préférence dans un bâtiment, comportant une colonne montante (2) et plusieurs canalisations circulaires (3) qui s'étendent depuis ladite colonne montante et qui retournent à celle-ci dans le sens d'écoulement, chaque canalisation circulaire (3) comportant au moins un consommateur (4) et au moins un dispositif de mesure (5), la consommation d'eau potable dans chaque canalisation circulaire (3) étant déterminée à l'aide d'un dispositif de mesure séparé (5), le dispositif de mesure (5) comportant au moins deux débitmètres (8), l'eau potable provenant des canalisations montante et de retour (6, 7) de la canalisation circulaire (3) s'écoulant à travers les dispositifs de mesure (5), le sens d'écoulement pouvant varier, le dispositif de mesure (5) détectant le sens d'écoulement correspondant et effectuant la facturation en conséquence, les dispositifs de mesure (5) des canalisations circulaires (3) communiquant entre eux afin de déterminer la consommation d'eau potable ou bien les débits acquis étant échangés et facturés en conséquence, ou les dispositifs de mesure (5) étant reliés entre eux par le biais d'une unité centrale.

2. Procédé de détermination de la consommation d'eau potable selon la revendication 1, **caractérisé en ce que** l'eau potable consommée et l'eau potable circulant dans la canalisation circulaire (3) sont déterminées séparément dans chaque canalisation circulaire (3) au moyen du dispositif de mesure (5).
